# NEUE EUROPÄISCHE PATENTSCHRIFT

(11) **EP 0 516 957 B2**
(45) Veröffentlichungstag und Bekanntmachung des Hinweises auf die Entscheidung über den Einspruch: **20.11.2002**
(45) Hinweis auf die Patenterteilung: 03.09.1997
(21) Anmeldenummer: 92106752.6
(22) Anmeldetag: 21.04.1992
(51) Int. Cl.: E01C 5/20, E04D 11/00, E01C 9/00

(54) **Gitterplatte**
Grating
Panneau de treillis

(30) Priorität: 07.06.1991 AT 115491
(43) Veröffentlichungstag der Anmeldung: 09.12.1992
(73) Patentinhaber: Ritter GmbH, 86827 Schwabmünchen (DE)
(72) Erfinder: Prestele, Eugen, 86161 Augsburg (DE)
(74) Vertreter: Gallo, Wolfgang, Dipl.-Ing. (FH)

(56) Entgegenhaltungen:
- EP-A- 0 384 023
- DE-A- 3 534 078
- DE-U- 8 622 303
- DE-U- 9 005 078
- US-A- 3 040 637
- US-A- 3 960 375
- US-A- 4 111 585
- US-A- 4 621 942

## Beschreibung

Die Erfindung betrifft eine Gitterplatte nach dem Oberbegriff des Anspruchs 1.

Eine solche Gitterplatte ist Gegenstand der US-A-41 11 585. Diese Gitterplatte weist eine Bodenplatte und mit dieser einstückige Seitenwände auf, die wie die Wände einer Bienenwabe angeordnet sind und nach oben offene sechseckige Kammern bilden. Im Boden jeder Kammer ist eine kreisförmige Drainageöffnung vorgesehen.

Die Bodenplatte hat an ihren Rändern Vorsprünge in Form von Rastnasen sowie Rastausnehmungen, so daß derartige Gitterplatten nebeneinander angeordnet und verrastet werden können, indem die Rastnasen und Rastausnehmungen benachbarter Gitterplatten ineinandergreifen.

Mit solchen Gitterplatten können Flächen begrünt werden, indem Erdreich in die Kammern der Gitterplatten eingefüllt und Rasen angesät wird. Die Graswurzeln können sich dabei über die Drainageöffnungen auch mit dem Untergrund verwurzeln.

Eine ähnliche bekannte Gitterplatte ist aus der US-A-4 621 942 bekannt. Diese hat zwar keine Rastnasen und Rastausnehmungen zum gegenseitigen Zusammenstecken benachbarter Gitterplatten, aber in den Oberkanten der Seitenwände sind Einschnitte gebildet, die eine seitliche Ausbreitung von Rasenwurzeln ermöglichen sollen.

Aus dem DE-U-90 05 078 ist eine weitere ähnliche Gitterplatte bekannt, bei welcher die Seitenwände in ihrem unteren Bereich mit Aussparungen versehen sind, die eine Querverwurzelung von Rasenwurzeln von Kammer zu Kammer ermöglichen. Bei dieser bekannten Gitterplatte hat die Bodenplatte an ihren Rändern federnde Rastnasen, und die randständigen Kammern sind zwar, wie bei den beiden zuvor beschriebenen bekannten Gitterplatten, an allen Seiten durch die Seitenwände geschlossen, ragen aber etwas über den Bodenplattenrand über, derart, daß beim seitlichen Aneinandersetzen von zwei solchen Gitterplatten die Rastnasen der Bodenplatte jeder Gitterplatte unter die über die Bodenplatte überstehenden Seitenwände der randständigen Zellen der benachbarten Gitterplatte greifen und die beiden Platten so miteinander verhaken.

Alle drei bekannten Gitterplatten haben eine von den Seitenwänden gebildete Wabengitterkonstruktion, die auch an den Gitterplattenrändem geschlossen ist. Beim Aneinandersetzen von solchen Gitterplatten zu einem Plattenverbund ergibt sich also an den Fugen zwischen benachbarten Platten jeweils ein flächiges Aneinanderliegen der randseitigen Seitenwände der einen Platte mit den randseitigen Seitenwänden der anderen Platte.

Diese Gitterplatten weisen eine Reihe von Nachteilen auf. Da die randseitigen Seitenwände benachbarter Platten bündig gegeneinander zu liegen kommen, wird das Verlegen behindert, wenn Steine und Erdreich zwischen die aneinanderliegenden Seitenwände gelangt. Diese Steine und das Erdreich müssen entfernt werden, da sonst ein gegenseitiges Verrasten benachbarter Gitterplatten nicht möglich ist. Da die Rastnasen und die Rastausnehmungen längs des Plattenrands miteinander abwechseln, müssen benachbarte Platten zum Verrasten gegeneinander gekippt werden, damit die Rastnasen der einen Platte in dic Rastausnehmungen der anderen Platte und umgekehrt eingreifen. Ein weiterer Nachteil ist darin zu sehen, daß die Einschnitte an den Oberseiten der Seitenwände scharfkantig ausgebildet sind und somit von ihnen eine Verletzungsgefahr ausgeht.

Es besteht die Aufgabe, die Gitterplatte so auszubilden, daß ein leichtes Verlegen einander benachbarter Platten ohne Behinderung durch Steine und Erdreich möglich ist.

Gelöst wird diese Aufgabe mit den kennzeichnenden Merkmalen des Anspruchs 1. Vorteilhafte Ausgestaltungen sind den Unteransprüchen entnehmbar.

Ausführungsbeispiele werden nachfolgend anhand der Zeichnungen näher erläutert. Es zeigen:
- **Fig. 1**: eine Draufsicht auf die Randbereiche dreier benachbarter Gitterplatten vor deren Zusammenfügen;
- **Fig. 2**: eine der Figur 1 entsprechende Draufsicht bei aneinandergefügten Gitterptatten;
- **Fig. 3**: eine Draufsicht auf eine von zwei Teilkammem benachbarter Gitterplatten gebildeten Kammer;
- **Fig. 4**: einen Vertikalschnitt längs der Linie IV - IV in Figur 3;
- **Fig. 5**: einen Schnitt durch eine Kammer;
- **Fig. 6**: eine Seitenansicht des oberen Teils einer Kammer;
- **Fig. 7**: eine der Figur 3 entsprechende Ansicht bei einem weiteren Ausführungsbeispiel;
- **Fig. 8**: einen Vertikalschnitt längs der Linie VIII - VIII in Figur 7;
- **Fig. 9**: eine Draufsicht auf eine Kammer bei einem weiteren Ausführungsbeispiel;
- **Fig. 10**: einen Vertikalschnitt längs der Linie X - X in Figur 9;
- **Fig. 11**: eine weitere Ausführungsform des Randbereichs zweier Gitterplatten und
- **Fig. 12**: eine dritte Ausführungsform eines Randbereichs.

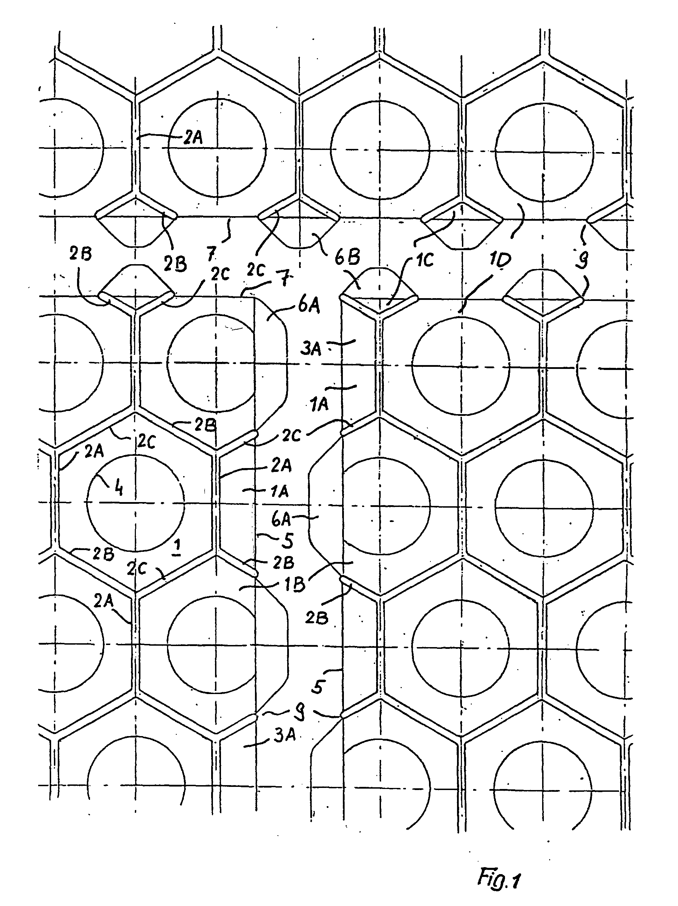

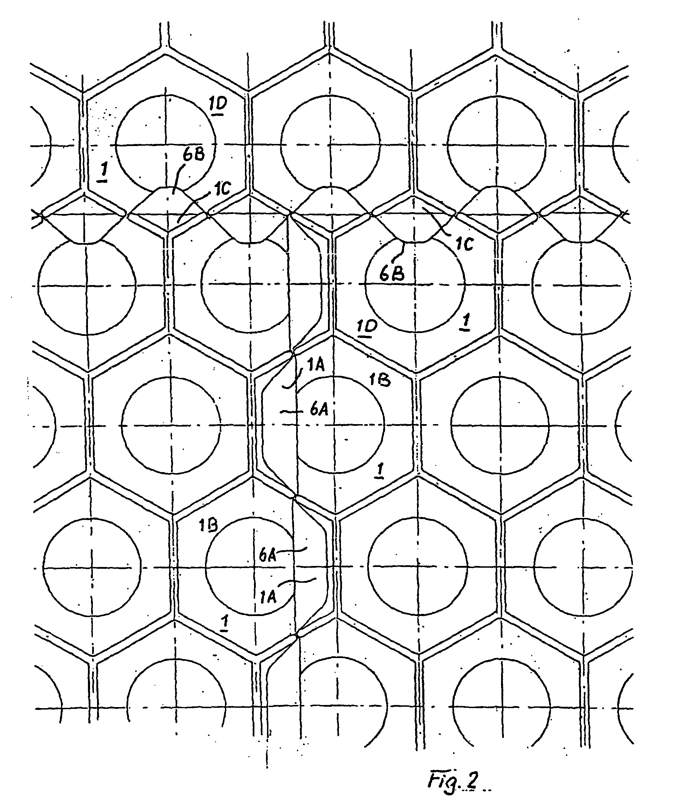

Die Figuren 1 und 2 zeigen die Randbereiche von drei aneinanderstoßenden Gitterplatten. Außerhalb dieser Randbereiche weisen die Gitterplatten nach oben offene sechseckige Kammern auf, welche von den sechs vertikalen Seitenwänden 2A, 2B und 2C sowie dem Boden 3 gebildet werden, der eine kreisförmige Drainageöffnung 4 aufweist. Auf diese Weise ergibt sich eine bienenwabenförmige Struktur der Gitterplatten. Die beiden einander gegenüberliegenden Ränder 5 der Gitterplatten schneiden jeweils die dazu schräg verlaufenden Seitenwände 2B und 2C im Abstand zu der parallel zum Rand 5 verlaufenden Seitenwand 2A. Auf diese Weise entstehen längs des Rands 5 Teilkammern 1A und 1B, wobei iängs des Rands 5 die Kleinen Teilkammern 1A mit den großen Teilkammern 1B abwechseln. Längs des Plattenrands 5 sind bei den großen Teilkammern 1B Vorsprünge 6A angeformt, die in etwa eine Kontur aufweisen, die der Kontur einer kleinen Teilkammer 1A entspricht und welche über den Rand 5 überstehen. Der Rand 5 verläuft im Abstand zur Seitenwand 2A der kleinen Teilkammern 1A. Der Abstand des Rands 5 zu einer Seitenwand 2A einer großen Teilkammer 1B entspricht somit dem Abstand zwischen zwei benachbarten Seitenwänden 2A abzüglich dem Abstand des Rands 5 von einer Seitenwand 2A einer kleinen Teilkammer 1A.

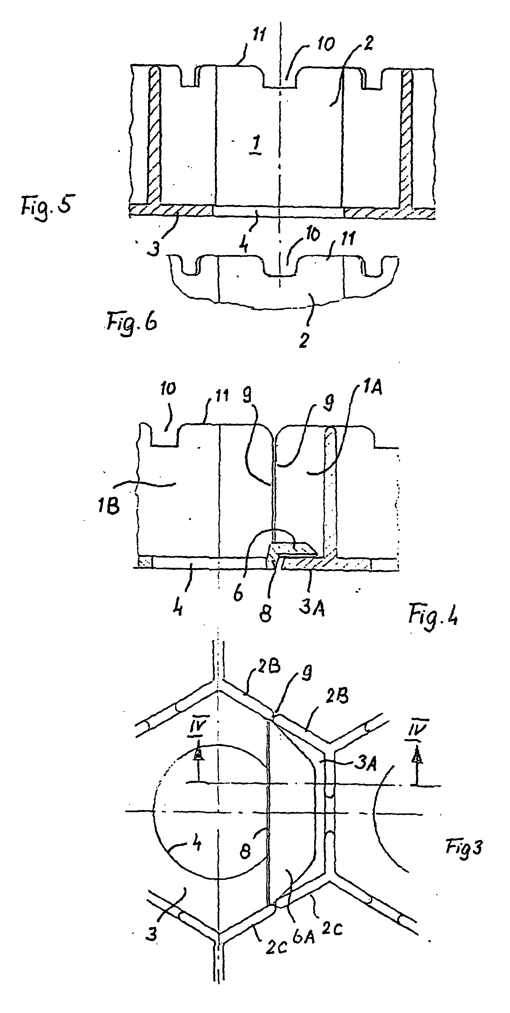

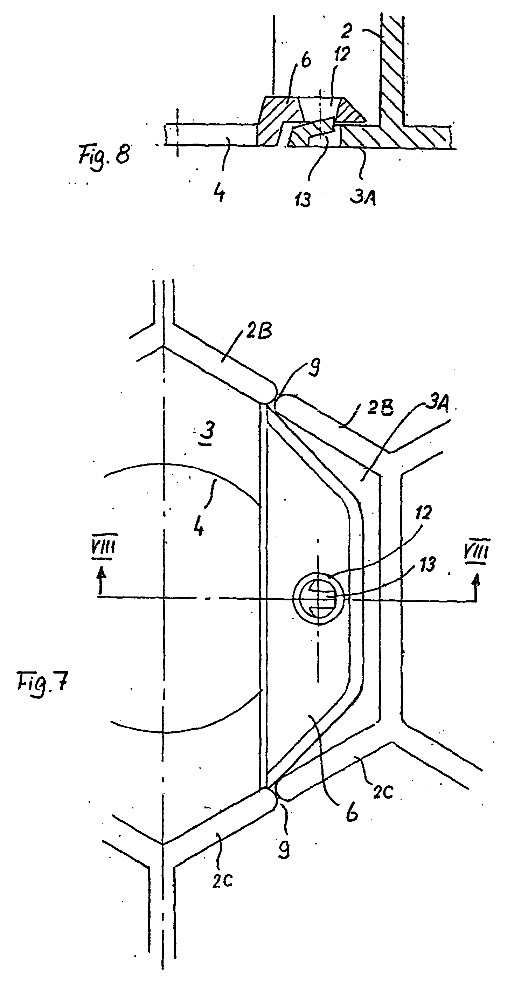

Längs der beiden anderen Ränder 7, welche rechtwinklig zu den Rändern 5 verlaufen, werden ebenfalls die dazu schräg verlaufenden Seitenwände 2B und 2C im Abstand zu den Seitenwänden 2A, welche senkrecht zum Rand 7 verlaufen, geschnitten. Es entstehen auf diese Weise Teilkammern 1C und 1D, die miteinander abwechseln. An den kleinen Teilkammem 1C sind ebenfalls bodenseitig Vorsprünge 6B angeformt. Wie den Figuren 3 und 4 zu entnehmen ist, sind die Vorsprünge 6A und 6B an ihrer Basis nach oben abgewinkelt, wobei die Abwinkelung mit 8 bezeichnet ist. Die Höhe der Abwinkelung ist jeweils etwas größer als die Dicke des Bodens 3.

Werden die beiden in Figur 1 unteren Bodenplatten mit ihren Rändern 5 aneinandergefügt, dann ergänzen sich die einander gegenüberliegenden Teilkammern 1A und 1B jeweils zu einer Kammer 1. Hierbei übergreift jeweils ein Vorsprung 6A den Bodenbereich 3A, der gegenüberliegenden kleinen Teilkammer 1A. In vertikaler Richtung gesehen berühren sich die Seitenwände 2 der aneinanderstoßenden Gitterplatten nur längs der vertikalen Kanten 9 der von den Rändern 5 beschnittenen Seitenwände 2B und 2C. Da diese Kanten zudem verrundet sind, behindern Steine und Erdreich das Verlegen der Gitterplatten nicht.

Da die beiden Gitterplatten längs der Ränder 5 über die Vorsprünge 6A miteinander verzahnt sind, ergibt sich eine gute Verankerung der einzelnen Platten zueinander gegen seitliche Verschiebekräfte. Da die Vorsprünge 6A der beiden Gitterplatten den jeweils gegenüberliegenden Bodenbereich 3A übergreifen, wird ein Höhenversatz zwischen den Gitterplatten vermieden.

Entsprechendes ergibt sich, wenn die in Figur 1 obere Gitterplatte gegen die beiden unteren Gitterplatten angefügt wird. In diesem Fall ergänzen sich die großen Teilkammern 1B mit den gegenüberliegenden kleinen Teilkammem 1C zu einer Kammer 1. Die Vorsprünge 6B an den kleinen Teilkammern 1C übergreifen jeweils den Bodenbereich der gegenüberliegenden Teilkammer 1D. In vertikaler Richtung ist ebenfalls nur eine Berührung längs der Kanten 9 gegeben.

An ihrer Oberseite sind die Seitenwände 2 mit Einschnitten 10 versehen, die jeweils eine Verbindung zwischen den einander benachbarten Kammern 1 herstellen. Die Kanten zwischen den Einschnitten 10 und den Oberseiten 11 der Seitenwände 2 sind verrundet, wobei auch Verrundungen an der Basis der Einschnitte 10 vorgesehen sein können, wie dies die Figur 6 zeigt. Weiterhin sind die Übergänge zwischen den vertikalen Kanten 9 und den Oberseiten 11 verrundet, wie dies die Figur 4 zeigt. Durch diese Verrundungen wird eine Verletzungsgefahr wesentlich vermindert. Die Einschnitte 10 ermöglichen eine Verwurzelung von einer Kammer 1 zur anderen Kammer 1 und sind weiterhin bezüglich ihrer Basis ein Maß für die Füllhöhe der Kammern 1 mit Humus.

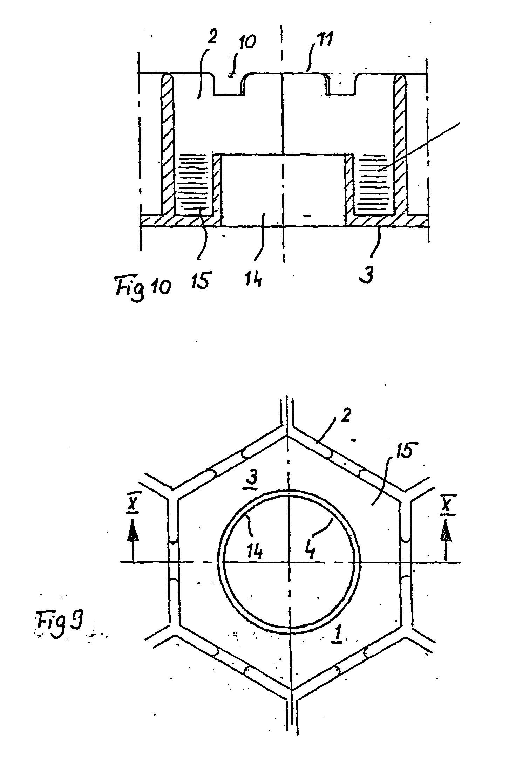

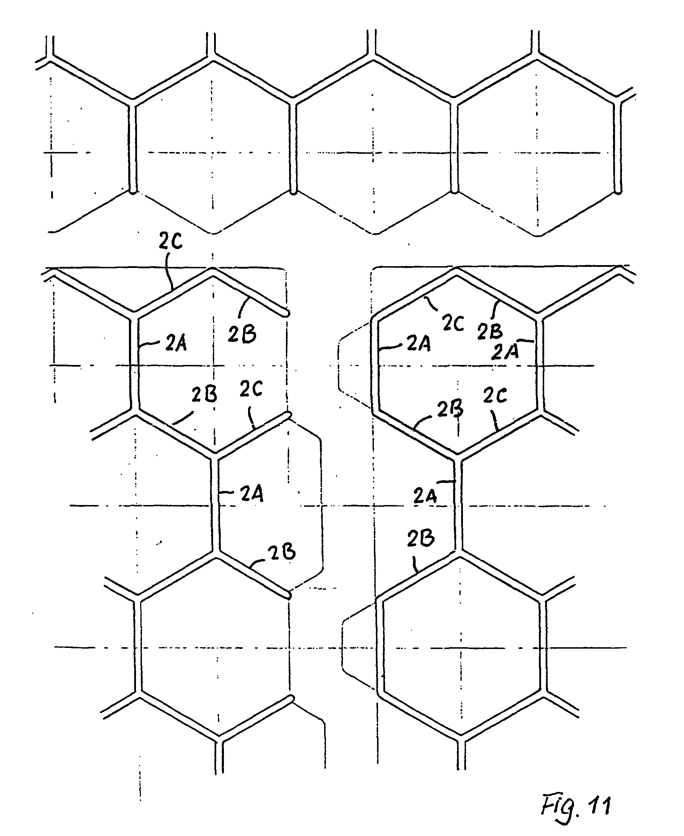

Bei dem Ausführungsbeispiel nach den Figuren 7 und 8 sind die Vorsprünge 6 jeweils mit dem Bodenbereich 3A der gegenüberliegenden Teilkammer der anstoßenden Gitterplatte verrastet. Zu diesem Zweck weist der Vorsprung 6 eine nach unten sich verjüngende Bohrung 12 auf, mit welcher eine elastische Rastnase 13 verrastet, die am Bodenbereich 3A angeformt ist. Da die Bohrung 12 sich nach unten konisch verjüngt, wird erreicht, daß die elastische Rastnase 13 sich in die Bohrung 12 spreizt, wenn Kräfte wirken, die in Richtung einer Trennung der Gitterplatten wirken. Dies ist ein wesentlicher Unterschied zum Stand der Technik, wo die Rastnasen nach unten ausweichen, wenn solche Kräfte wirken.

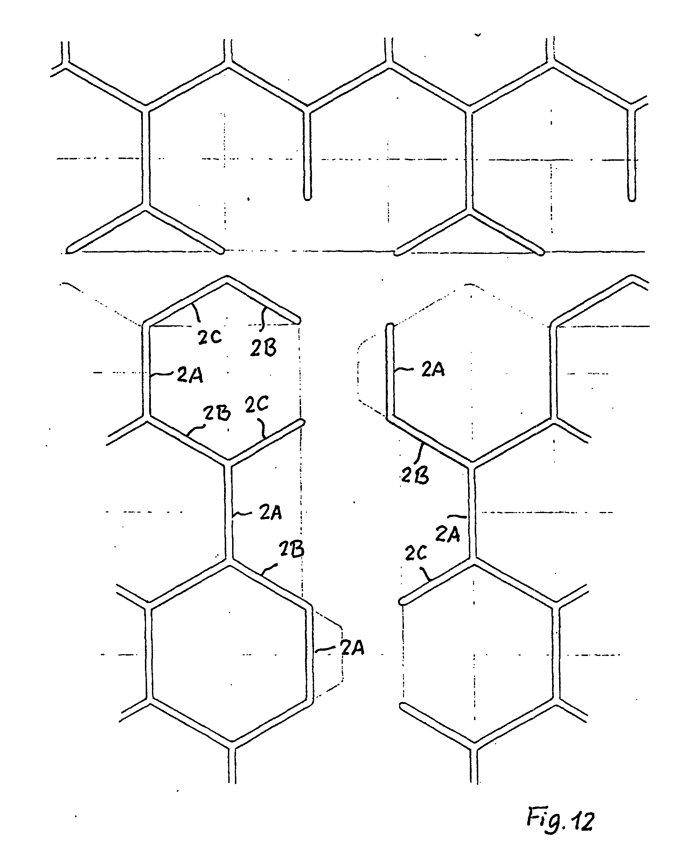

Bei der Ausführungsform nach den Figuren 9 und 10 ist die Drainageöffnung 4 von einer vertikalen Wand 14 umgeben, deren Höhe geringer ist als die Höhe der Seitenwände 2. Auf diese Weise wird zwischen der Wand 14 und den Seitenwänden 2 ein Feuchtigkeitsspeicher 15 gebildet. Damit sind die Gitterplatten auch einsetzbar auf Trockengebieten sowie für die Flach- und Schrägdach-Begrünung.

Die Figuren 11 und 12 zeigen alternative Ausbildungen der Randbereiche zweier benachbarter Gitterplatten, die ebenfalls gewährleisten, daß keine Seitenwände der benachbarten Gitterplatten flächig gegeneinander zu liegen kommen.

Bei der Ausführungsform nach Figur 11 verläuft der Rand 5 bei der linksseitigen Gitterplatte so, daß bei jeder übernächsten Kammer 1 die Seitenwand 2A abgeschnitten ist und die jeweils dazwischenliegenden Teilkammern halb so groß sind wie eine Kammer 1.

Beim Rand der benachbarten Gitterplatte besteht jede übernächste Kammer aus einer durch die Seitenwände 2 seitlich geschlossenen Kammer 1, während die dazwischenliegenden Teilkammern halb so groß sind wie eine Kammer 1. Beim Aneinanderfügen der Gitterplatten ergänzen sich die dazwischenliegenden Teilkammern der benachbarten Gitterplatten zu einer Kammer 1, während die seitlich offenen Kammern der einen Gitterplatte verschlossen werden durch die Seitenwände 2A der benachbarten Gitterplatte.

Bei den Gitterplatten nach Figur 12 wechseln längs des Randes 5 einander ab eine seitlich geschlossene Kammer, eine Teilkammer und eine seitlich offene Kammer. Die Teilkammern benachbarter Gitterplatten ergänzen sich zu einer Kammer 1 und die seitlich offenen Kammem werden jeweils durch die Seitenwand 2A der jeweils anderen Gitterplatte verschlossen.

## Patentansprüche

1. Gitterplatte mit wabenförmiger Struktur,
bestehend aus einer Bodenplatte (3) und aus damit einstückigen, ein Wabengitter bildenden Seitenwänden (2A, 2B, 2C), die jeweils nach oben offene sechseckige Kammern (1) bilden,
wobei die Bodenplatte (3) im Bereich jeder Kammer (1) mit einer Drainageöffnung (4) versehen ist
und die Bodenplatte (3) an ihren Rändern (5, 7) Vorsprünge (6) zum Übergreifen der Bodenplattenränder anderer benachbarter Gitterplatten aufweist.
**dadurch gekennzeichnet, daß** von den entlang der Bodenplattenränder (5, 7) befindlichen Kammern jede Kammer als zum Rand hin offene Teilkammer (1A, 1B) ausgebildet ist, die durch Seitenwände einer jeweils benachbarten weiteren Gitterplatte zu jeweils einer geschlossenen Kammer ergänzbar ist, wobei die Seitenwände der zum Rand offenen Teilkammern nur längs ihrer vertikalen Kanten mit Seitenwänden einer jeweils benachbarten Gitterplatte in Berührung kommen können,
daß bei randseitigen Teilkammern mit einer parallel zum Bodenplattenrand (5) verlaufenden Seitenwand (2A) die schräg zum Bodenplattenrand verlaufenden Sei-tenwände (2B, 2C) mit Abstand von der parallel zum Bodenplattenrand (5) verlaufenden Seitenwand (2A) am Bodenplatten rand abgeschnitten endigen und
bei randseitigen Teilkammern mit senkrecht zum Bodenplattenrand (7) verlaufenden Seitenwänden (2A) die zum Bodenplattenrand (7) schräg verlaufenden Seitenwände mit Abstand zu den zum Bodenplattenrand senkrecht verlaufenden Seitenwänden am Bodenplattenrand abgeschnitten endigen, und
daß an den Bodenplattenrändern (5, 7) jeweils große und kleine Teilkammern (1A, 1B, 1C, 1D) miteinander abwechseln, wobei die kleinen Teilkammern (1A, 1C) komplementär zu den großen Teilkammern (1B, 1D) ausgebildet sind.

2. Gitterplatte nach Anspruch 1, **dadurch gekennzeichnet, daß** die Vorsprünge (6) an ihrer Basis abgewinkelt sind. um den Bodenplattenrandbereich (3A) einer benachbarten Gitterplatte übergreifen zu können.

3. Gitterplatte nach Anspruch 2, **dadurch gekennzeichnet, daß** die Vorsprünge (6) an jeder zweiten Teilkammer (1B, 1C) angeordnet sind.

4. Gitterplatte nach Anspruch 2 oder 3, **dadurch gekennzeichnet, daß** die Vorsprünge (6A) an den großen Teilkammern (1B) angeordnet sind und eine den kleinen Teilkammern (1A) entsprechende Umrißform haben.

5. Gitterplatte nach Anspruch 2 oder 3, **dadurch gekennzeichnet, daß** die Vorsprünge (6B) an den kleinen Teilkammern (1C) angeordnet sind und sich von ihrer Basis aus keilförmig erweitern und Einschnitte zum Umgreifen der Außenkante von Seitenwänden (2B, 2D) einer benachbarten Gitterplatte haben.

6. Gitterplatte nach einem der Ansprüche 2 bis 5, **dadurch gekennzeichnet, daß** die Vorsprünge (6) eine Bohrung (12) zur Aufnahme einer elastischen Rastnase (13) am Bodenplattenrandbereich (3A) einer benachbarten Gitterplatte aufweisen.

7. Gitterplatte nach Anspruch 1, **dadurch gekennzeichnet, daß** die Bohrung (12) sich nach unten konisch verjüngt.

8. Gitterplatte nach einem der Ansprüche 1 bis 7, **dadurch gekennzeichnet, daß** die Seitenwände (2A, 2B, 2C) an ihrer Oberkante (11) mit Einschnitten (10) mit verrundeten Kanten versehen sind.

9. Gitterplatte nach einem der Ansprüche 1 bis 8, **dadurch gekennzeichnet, daß** die Oberkanten der randständigen Seitenwände (2B, 2C) verrundet sind.

10. Gitterplatte nach einem der Ansprüche 1 bis 9, **dadurch gekennzeichnet, daß** die Drainageöffnungen (4) jeweils von einer vertikalen Wand (14) umgeben sind, deren Höhe kleiner ist als diejenige der Seitenwände (2).

## Claims

1. Grid plate with honeycomb structure,
consisting of a base plate (3) and integral side walls (2A, 2B, 2C) which form hexagonal chambers (1) which are open at the top, and form a honeycomb grid,
where the base plate (3) has a drainage opening (4) within each chamber (1),
and the base plate (3) has on its borders (5, 7) projections (6) to extend over the base plate borders of other adjacent grid plates,
**characterised in that** of the chambers along the base plate borders (5, 7) every chamber is formed as a part chamber (1A, 1B) open towards the border, which can be completed by side walls of a further adjacent grid plate to form a closed chamber, where the side walls of the part chambers open towards the border come into contact with the side walls of the adjacent grid plate concerned only along their vertical edges,
that in the border-sited part chambers with a side wall (2A) running parallel to the base plate border (5), the side walls (2B, 2C) running oblique to the base plate border end at a distance from the side wall (2A) running parallel to the base plate border, and are cut away at the base plate border, and
that in the border-sited part chambers with side walls (2A) running perpendicular to the base plate border (7), the side walls running oblique to the base plate border (7) end at a distance from the side walls running perpendicular to the base plate border, and are cut away at the base plate border, and
that at the base plate borders (5, 7) large and small part chambers (1A, 1B, 1C, 1D) alternate, where the small part chambers (1A, 1C) are formed complementary to the large part chambers (1B, 1D).

2. Grid plate according to claim 1, charaterised in that the projections (6) are angled up at their base in order to be able to extend over the base plate border area (3A) of an adjacent grid plate.

3. Grid plate according to claim 2, **characterized in that** the projections (6) are arranged on every other part chamber (1AB, 1C).

4. Grid plate according to claim 2 or 3, **characterized in that** the projections (6A) are arranged on the large part chambers (1B), and have a peripheral form corresponding to the small part chambers (1A).

5. Grid plate according to claim 2 or 3, **characterized in that** the projections (6B) are arranged on the small part chambers (1C) and from their base expand in a wedge shape, and have notches for engaging on the outer edges of side walls (2B, 2D) of an adjacent grid plate.

6. Grid plate according to an of claims 2 to 5, **characterized in that** the projections (6) have a hole (12) to hold an elastic locking tab (13) at the base plate border area (3A) of an adjacent grid plate.

7. Grid plate according to claim 1, **characterized in that** the hole (12) tapers downwardly.

8. Grid plate according to any of claims 1 to 7, **characterized in that** the side walls (2A, 2B, 2C) have at their top edge (11) notches (10) with round edges.

9. Grid plate according to any of claims 1 to 8, **characterized in that** the upper edges of the border-sited side walls (2B, 2C) are rounded.

10. Grid plate according to any of claims 1 to 9, **characterized in that** the drainage openings (4) are each surrounded by a vertical wall (14), the height of which is less than that of the side walls (2).

## Revendications

1. Dalle-grille à structure en nids d'abeilles, composée d'une plaque de fond (3) et de parois latérales (2A, 2B, 2C) réalisées d'une seule pièce avec cette dernière, formant une grille de nids d'abeilles et constituant des chambres (1) hexagonales et ouvertes vers le haut,
la plaque de fond (3) comportant une ouverture de drainage (4) dans la zone de chaque chambre (1), et
la plaque de fond (3) présentant sur ses bords (5, 7) des saillies (6) pour recouvrir les bords des plaques de fond d'autres dalles-grilles voisines,
**caractérisée par le fait que** parmi les chambres se trouvant le long des bords (5, 7) de la plaque de fond, chaque chambre est réalisée sous la forme d'une chambre partielle (1A, 1B) qui est ouverte en direction du bord et qui peut être completée par des parios latérales d'une autre dalle-grille voisine sous 1 forme d'une chambre fermée, les parois latérales des chambres partielles ouvertes en direction du bord ne pouvant entrer en contact avec des parois latérales d'une dalle-grille voisine que le long de leurs arêtes verticales,
que sur les chambres partielles côté bord présentant une paroi latérale (2A) s'etendant parallèlement au bord (5) de la plaque de fond, les parois latérales (2B, 2C) s'étendant de facon oblique par rapport au bord de la plaque de fond se terminent en étant coupées au bord de la plaque de fond à distance de la paroi latérale (2A) s'étendant parallèlement au bord (5) de la plaque de fond, et
que sur les chambres partielles côté bord présentant une paroi latérale (2A) s'étendant perpendiculairement au bord (7) de la plaque de fond, les parois latérales s'étendant de facon oblique per rapport au bord (7) de la plaque de fond se terminent en étant coupées au bord de la plaque de fond à distance des parois latérales s'étendant perpendiculairement au bord de la plaque de fond, et
que sur les bords (5, 7) de la plaque de fond, des chambres partielles (1A, 1B, 1C, 1D) grandes et petites alternent les unes avec les autres, les petites chambres partielles (1A, 1C) étant réalisées de facon complémentaire aux grandes chambres partielles (1B, 1D).

2. Dalle-grille suivant la revendication 1 **caractérisée par le fait que** les saillies sont coudées à leur base pour pouvoir recouvrir la zone (3A) du bord de la plaque de fond d'une dalle-grille voisine.

3. Dalle-grille suivant la revendicaton 2, **caractérisée par le fait que** les saillies (6) sont disposées sur une chambre partielle (1B, 1C) dur deux.

4. Dalle-grille suivant la revendication 2, ou 3, **caractérisée par le fait que** les saillies (6A) sont disponsées sur les grandes chambres partielles (1B) et présentent une forme de contour correspondant aux petites chambres partielles (1A).

5. Dalle-grille suivant la revendication 2, ou 3, **caractérisée par le fait que** les saillies (6B) sont disposées sur les petites chambres parielles (1C), s'élargissent en coin à partier de leur base et présentent des incisions pour entourer l'arête extérieure de parois latérales (2B, 2D) d'une dalle-grille voisine.

6. Dalle-grille suivant l'une des revendications 2 à 5, **caractérisée par le fait que** les saillies (6) présentent un trou pour recevour un nez d'encliquetage (13) élastique prévu dans la zone (3A) du bord de la plaque de fond d'une dalle-grille voisine.

7. Dalle-grille suivant la revendication 1, **caractérisée par le fait que** le trou (12) se rétrécit en cône vers le bas.

8. Dalle-grille suivant l'une des revendications 1 à 7, **caractérisée par le fait que** les parois latérales (2A, 2B, 2C) présentent à leur arête supérieure (11) des incisions (11) à arêtes arrondies.

9. Dalle-grille siuivant l'une des revendications 1 à 8, **caractérisée par le fait que** les arêtes supérieures des parois latérales (2B, 2C) côté bord sont arrondies.

10. Dalle-grille suivant l'une des revendications 1 à 9, **caractérisée par le fait que** les ouvertures de drainage (4) sont entourées chacune par une paroi verticale (14) dont la hauteur est inférieure à celle des parois latérales (2).
